# EUROPEAN PATENT APPLICATION

(11) **EP 3 940 618 A1**
(43) Date of publication of application: **19.01.2022**
(21) Application number: 20305822.7
(22) Date of filing: 16.07.2020
(51) Int. Cl.: G06Q 30/02

(54) **METHOD AND SYSTEM FOR PERSONALIZED LOYALTY PROGRAM**

(71) Applicant: Chanel Parfums Beauté, 92200 Neuilly-sur-Seine (FR)
(72) Inventor: PALUGAN, Thomas, 92200 Neuilly-sur-Seine (FR); PIROTZKY, Claire, 92200 Neuilly-sur-Seine (FR)
(74) Representative: Plasseraud IP

(57) **Abstract**

It is disclosed a method for managing a loyalty program comprising a predefined number of stages comprising at least one progression stage and at least one reward attribution stage, the method being implemented server comprising:
- a reward database storing comprising :
∘ For each reward attribution stage, a list of respective first-type rewards distributed in a plurality of categories, and at least one first-type reward attribution rule, and,
∘ at least one second-type reward, associated to a probability,
the method comprising, when a user reaches a reward attribution stage of its loyalty program, determining a reward to deliver to the customer, said determination comprising:

- performing a random draw of a type of reward to deliver to the customer according to the probability associated to each second-type reward,
- if the random draw outputs one second-type reward, determining the reward to deliver as the outputted second-type reward,
- if not,
∘ determining, based on the reward attribution stage, the customer's purchase history and the first-type reward attribution rule, a first-type reward category, and
∘ determining the reward to deliver to the customer as a first-type reward of the determined category.

## Description

### TECHNICAL FIELD

This disclosure relates to a method for personalizing a loyalty program for a customer.

### BACKGROUND ART

Numerous companies have provided their customers with loyalty programs, or frequent user programs, in order to enhance a customer's loyalty and to attract new customers.

Loyalty programs are usually designed such that the more a customer purchases products or services from a company, the more he will gain rewards or benefits. As an example, a frequent flyer program is a loyalty program of an airline, wherein each time the customer uses the airline, he earn a certain amount of miles, which he can then convert into discounts on airline tickets, free airline tickets, or upgrades in available products or services.

According to another example, a loyalty program in the field of fashion can comprise inviting a customer to private sales, or reward a customer with additional discounts on the products of a company.

However, the loyalty programs have become so widespread that customers have become used to frequently earning discounts, and thus such loyalty programs are no longer specifically attractive for the customers. Moreover, some rewards awarded to the customers can be found disappointing or useless, because they are not determined according to the customer's specific situation or preferences. There is therefore a need for a new type of attractive loyalty program.

### SUMMARY

This disclosure improves the above situation. In particular, an aim of the invention is to provide a way to personalize a loyalty program for a customer, in order to make the loyalty program more appealing to him.

Another aim of the invention is to provide a loyalty program that continuously keeps a surprising effect for a customer, in order to prevent the customer from being used to earning recurrent rewards.

In view of the above, a method for managing a loyalty program is disclosed, the loyalty program comprising a predefined number of stages comprising at least one progression stage and at least one reward attribution stage, the method being implemented by a loyalty program management server comprising :
- a computer,
- a reward database storing a list of rewards, wherein the list of rewards comprises :
   ∘ for each reward attribution stage, a list of respective first-type rewards distributed in a plurality of categories, and at least one first-type reward attribution rule, and,
   ∘ at least one second-type reward, associated to a probability,
- a loyalty programs database, storing, for each of a plurality of customers, a current state of a loyalty program associated to the customer, and information regarding the customer's purchase history,
   the method comprising, when a user reaches a reward attribution stage of its loyalty program, determining a reward to deliver to the customer, said determination comprising:
- performing a random draw of a type of reward to deliver to the customer according to the probability associated to each second-type reward,
- if the random draw outputs one second-type reward, determining the reward to deliver as the outputted second-type reward,
- if not,
   ∘ accessing the customer's purchase history,
   ∘ determining, based on the reward attribution stage, the customer's purchase history and the first-type reward attribution rule, a first-type reward category, and
   ∘ determining the reward to deliver to the customer as a first-type reward of the determined category.

In embodiments, the method further comprises a preliminary step of initializing a customer profile, comprising acquiring data relating to the customer, initializing a loyalty program of the customer, and storing in the loyalty programs database the initial state of the loyalty program of the customer in association with the data relating to the customer.

In embodiments, each loyalty program comprises a number of progression stages, wherein at least one progression stage precedes each reward attribution stage, and the transition from a progression stage to a next stage is triggered upon the customer performing at least one determined event.

An event triggering transition from a progression stage to a next stage can be chosen among the group consisting of:
- enrolling to the loyalty program,
- accessing a determined website,
- creating or accessing a personal account on a user interface of a determined website,
- purchasing an article or service online,
- purchasing an article or service of a type never purchased before,
- purchasing an article or service through a purchase channel never used before,
- visiting a cultural site or exhibition
- participating in a determined contest.

In embodiments, the loyalty program management server is further configured to access a database storing, for each of a plurality of points of sale, a level of stock of each first-type reward within the point of sale, and the method further comprises, if the random draw does not output a second-type reward:
- determining at least one point of sale based on customer's information,
- determining if at least one first-type reward of the determined category is in stock in at least one determined point of sale, and, if not,
- determining the reward to deliver to the customer as a first-type reward of another category from the one previously determined.

In embodiments, at least one first-type reward attribution rule determines the first-type reward category based on the total amount of transactions performed by the customer.

In embodiments, at least one first-type reward attribution rule determines the first-type reward category based on the time elapsed between the customer initiating its loyalty program and the customer reaching the current reward attribution step.

In embodiments, at least one first-type reward attribution rule determines a first-type reward category based on the number of purchases performed by the customer.

In embodiments, some first-type rewards are products rewards, the categories of first-type rewards relate to different categories of products, and at least one first-type reward attribution rule determines a first-type reward category based on the type of products that are regularly purchased by the customer.

In embodiments, the method further comprises a step of assigning a probability to each second-type reward prior performing the random draw.

In embodiments, some second-type rewards are events or service rewards, and the assignment of a probability to an event or service reward comprises:
- determining a location of the event or service,
- determining a location of the customer based on the acquired data relative to the customer or purchase data of the customer, and

- setting a zero probability for event or service rewards having a location remote from the location of the customer by a distance exceeding a determined threshold.

In embodiments, the method further comprises, at the end of a predefined period of time, terminating all the customers loyalty programs, updating the list of rewards stored in the rewards database, and for all the customers who previously had a customer loyalty program, initializing a new loyalty program.

In embodiments, the method further comprises analyzing the loyalty program of a customer in order to detect specific event or behavior, and assigning a status to the customer according to the detected event or behavior.

A computer software is also disclosed, comprising instructions to implement the method according to the above description, when the software is executed by a processor.

A system for implementing a personalized loyalty program is also disclosed, comprising a loyalty program management server comprising:
- a computer,
- a reward database storing a list of rewards, and
- a loyalty programs database, storing, for each of a plurality of customers, a current state of a loyalty program associated to the customer,
wherein the server is configured for implementing the method according to the description above.

In embodiments, said system may further comprise a customer terminal, configured to receive, from the customer, identification information and information related to a purchase of the customer, and to transmit said information to the server, the customer terminal being further configured to receive reward information from the computer and display said reward information.

### BRIEF DESCRIPTION OF DRAWINGS

Other features, details and advantages will be shown in the following detailed description and on the figures, on which:
- Figure 1 schematically shows an exemplary system for implementing the method according to an embodiment.
- Figure 2 schematically shows an example of loyalty program according to an embodiment.
- Figure 3 schematically shows the main steps of a method according to an embodiment.
- Figure 4 schematically shows an example of a list of rewards of the loyalty program.

### DESCRIPTION OF EMBODIMENTS

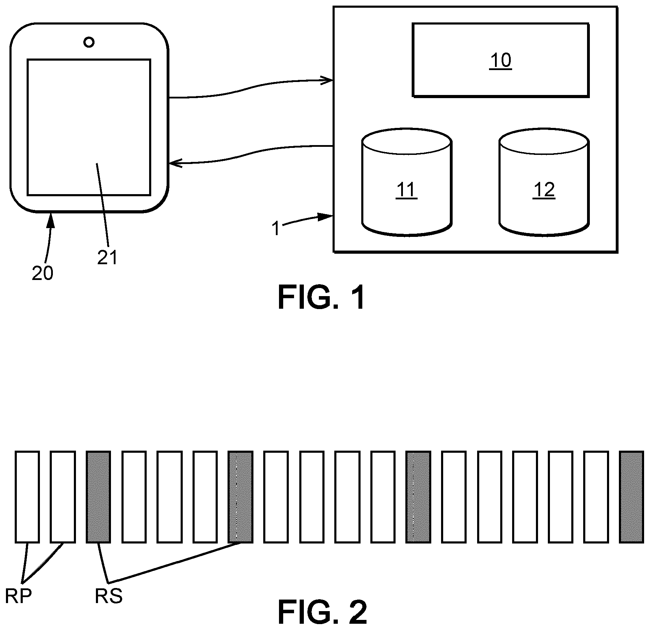

With reference to figure 1, a system for managing a loyalty program for a customer is shown. This system comprises a loyalty program management server 1, comprising a computer 10, having processing means such as a processor, a microprocessor, a controller or a microcontroller, a reward database 11 storing a list of rewards that can be earned, in a loyalty program, by a customer, and a loyalty programs database 12. The latter stores, for each of a plurality of customers, a current state of a loyalty program of the customer, together with data relative to the customers.

The data relative to the customers stored in the database 12 can comprise identity information such as a name, email address, login information comprising identifier and password, location information about the customer such as a city, region or postcode, and information regarding the purchases of the customer, including the date and location of the purchase, the identification of the purchased product, and the identification of products purchased simultaneously to the purchased product.

The reward database 11 stores a list of rewards that can be earned. Said rewards can include products rewards, such as skincare products, perfumes, pieces of clothes or accessories, etc. Said rewards can also include service rewards, such as a coupon for having a massage, or care service, or invitation to a wellness place such as a beauty salon, a hairdresser, a spa, etc. The rewards can also include event rewards, comprising an invitation for an event having limited duration in time. For instance, an event reward may be an invitation to a show, exhibition, sport competition, etc.

In an embodiment, the reward database 11 may store two sets of rewards having different properties, as will be exemplified in more details below. In particular, the reward database may store a set of first-type rewards, which can be assigned to a customer at least based on determined rules. The reward database may also store a set of second-type rewards, which can be randomly assigned to a customer based on probabilities assigned to these rewards. For instance, the first-type rewards may be "ordinary" rewards, and the second-type rewards may be "extraordinary" rewards, which are more exclusive and assigned to any customer at random. Preferably, the second-type rewards may not be assigned to a customer based on customer purchase history. As explained in more details below, the set of first-type rewards comprises a subset of rewards for each reward attribution stage of the loyalty program, and furthermore this subset is further distributed into several categories. On the other hand, a reward of the second type may be attributed to a user at any reward attribution stage of the loyalty program.

The system may also comprise a customer terminal 20, such as a mobile phone, a digital tablet or a personal computer, the terminal being configured to communicate with the loyalty programs management server through a telecommunication network. To this end, the customer may download on its terminal a software application. The customer terminal is configured to receive, from the customer, identification information such as login information, and information relating to a purchase of the customer, and to transmit said information to the loyalty programs management server 1. The customer terminal is further configured to receive, from the loyalty programs management server 1, reward information, and display said information on a screen 21.

The information relating to a purchase of a customer may be acquired by scanning or acquiring a picture of a purchase receipt, and processing said purchase receipt to extract purchase information.

The software application downloaded on the customer terminal may also communicate with software applications of social networks to allow the user to communicate about its progresses on the loyalty program over social networks.

The loyalty program management server 1 may further be configured to access, for instance remotely, a stocks database storing, for each of a plurality of points of sale, a level of stock of each first-type reward within the point of sale. In an embodiment, all points of sale are remotely connected to a central stocks database, which can be updated upon performing purchases. Alternatively, each point of sale may comprise a respective stocks database and memory, and the loyalty program management server 1 may be configured to access each respective stocks database.

The loyalty program management server 1 described above is adapted to manage a loyalty program for a plurality of customers, while personalizing the loyalty program for each customer. With reference to figure 2, each loyalty program comprises a predefined number of stages, comprising at least one reward attribution stage SR. In embodiments, each loyalty program comprises a plurality of reward attribution stages SR. As will be disclosed in more details below, a customer receives a reward upon reaching a reward attribution stage in its loyalty program.

Each loyalty program may also comprise a plurality of progression stages SP, wherein at least one progression stage precedes each reward attribution stage, and reaching a progression stage does not allow a customer from receiving a reward. Moreover, each progression stage is associated to one or several conditions for transitioning towards a next stage.

In embodiments, the reward attribution stages are defined such that the number of progression stages preceding each reward attribution stages increases at each reward attribution stage. In the example shown in figure 2, there are two progression stages before the first reward attribution stage, three progressions stages before the second reward attribution stage, and so on until the fourth reward attribution stage which is the last stage of the loyalty program.

The transition from a progression stage to a next stage is triggered when the associated condition is fulfilled. The condition may comprise detecting an event related to the customer. The event can be any of the following list:
- the purchase of a product or service from the company owning the loyalty program, or a specific type of purchase which can be the purchase of a new type of product or service, the purchase of an article through a new channel (for instance online or in a new shop), etc.
- the subscription to the loyalty program,
- creating or accessing a personal account on a user interface of a determined website, for instance a website owned, managed or selling articles from the company owning the loyalty program or a partnering company,
- the visit of a cultural site or exhibition,
- the participation in a contest organized by the company, etc.

In embodiments, the rewards that can be attributed to a customer vary at each reward attribution stage. In particular, the reward database may store, for each reward attribution stage, a number or list of first-type rewards, such that a reward that can be obtained at a reward attribution stage may not be obtained at any other reward attribution stage.

Moreover, for each reward attribution stage, the first-type rewards may be distributed in a plurality of categories, for instance between at least 2 and 10 categories. The rewards of different categories are different types of products or services. For instance, at a given reward attribution stage, a first category of rewards can include bookmarks, while a second category includes samples of products. In addition, each category may include a plurality of different rewards. For instance, a category of rewards may comprise a plurality of samples of lipsticks of different colors.

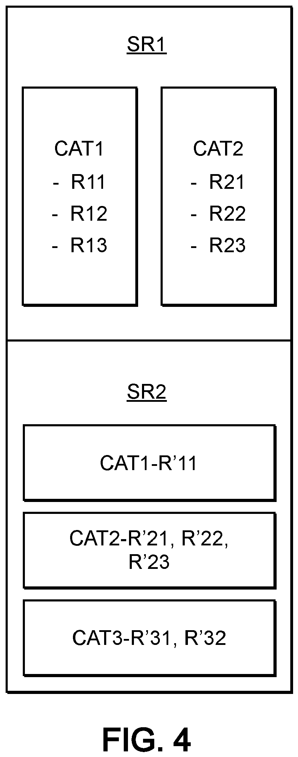

A non-limiting example of a set of first-type rewards is shown in figure 4, in which first and second reward attribution stages SR1 and SR2 are shown. The first reward attribution stage SR1 comprises two categories of rewards, each comprising three different rewards, and each reward is specific to only one category. The second reward attribution stage SR2 comprises three categories of rewards, the first one comprising only one reward, the second one comprising three rewards and the third one comprising two rewards, which are all different from the rewards of the first attribution stage.

In order to determine a category of reward which is attributed to a customer, the reward database also stores, for each reward attribution stage of the loyalty program, at least one first-type reward attribution rule. Different rules may exist for each reward attribution stage.

For instance, a rule may determine a category of reward to assign to a customer based on previous transaction history of the customer, such as the number of purchases performed by the customer since its enrolment in the loyalty program. The rule may assign a first category of reward if the customer has purchased less than two articles, a second category of reward if the customer has purchased between two and five articles, and a third category of reward if the customer has purchased more than five articles. A rule may also determine a category of reward based on the total amount of transaction spent by a customer.

In other embodiments or for other reward attribution stages, a rule may also determine a category of reward to assign to a customer based on the amount of time elapsed since the customer enrolled its loyalty program, which corresponds to the amount of time needed to go through all the progression stages up to the current reward attribution stage. For instance, a rule may assign a first category of reward if the time is inferior to three months, a second category if the time is between 3 and 9 months, and a third category if the time exceeds nine months.

In other embodiments or for other reward attribution stages, a rule may also determine a category of products which can be provided to the customer as a reward. For instance, categories of rewards may correspond to diverse products categories, and include one category of make-up products and one category of skincare products. In that case, a rule may determine a category of reward to assign to a customer based on the customer's purchase history, and in particular the type of product that the customer's regularly purchases. In an embodiment, a rule may be set that grants a customer a first-type reward of a category which does not correspond to the category of products that is regularly purchased by the customer, in order to make him or her discover a new category of products.

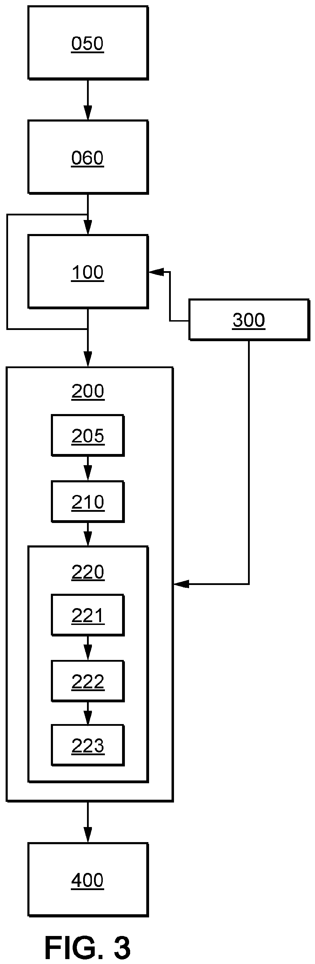

With reference to figure 3 is shown an exemplary embodiment of a method for personalizing a loyalty program for a customer. This method is implemented by the computer 10. This method may comprise a preliminary step 050 of initialization of the list of rewards stored in the database, comprising storing, or updating, the list of rewards of the reward database 11. In an embodiment, the reward database 11 is regularly updated, such as for instance every year, and the list of rewards is renewed at each update.

The method may then comprise a preliminary step 060 of initializing a customer profile, comprising acquiring data relating to the customer, for instance by receiving said data from the customer's terminal, initializing a loyalty program of the customer, and storing in the loyalty programs database 12 the initial state of the loyalty program of the customer along with the data relating to the customer.

In an embodiment, the initialization of the customer loyalty program is an event for the transition to a next stage, hence this step may also comprise achieving this transition and storing an updated state for the loyalty program of the customer.

The method may then comprise at least one detection 100 of an event triggering a transition from a progression stage to the next stage. Each detection step may comprise detecting the event, accessing the loyalty program of the customer, and determining if the event fulfills a condition for transitioning to a next stage and, if so allowing the customer to transition to a next stage and updating the state of the loyalty program accordingly. If the event does not fulfill a condition for transitioning to a next stage, it may anyway be stored with the customer data, even if the customer remains at the same progression stage.

As a non-limiting example, when the event is a purchase performed by the customer, this detection may comprise:
- receiving purchase data associated to customer data, said purchase data comprising information about the purchased product, the data and location of the purchase, possibly the types or identifiers of products purchased at the same time as the purchased product, information whether the purchase was made online or in a store, information about a reseller identification, etc.
- identifying, from the customer data, a loyalty program associated with the customer, and storing the purchase data in the loyalty program database 12 in association to the loyalty program of the customer,
- if the condition for transition between the current stage to a next stage of the program is fulfilled, allowing the customer to transition from its current stage to a next stage, and
- storing the updated state of the loyalty program of the customer.

When the triggering event is a visit of an exhibition or site by the customer, this detection may comprise:
- receiving visit data associated to customer data, said visit data comprising information about the visited site or exhibition, and the data of the visit,
- identifying, from the customer data, a loyalty program associated with the customer, and storing the visit data in the loyalty program database 12 in association to the loyalty program of the customer,
- allowing the customer to transition from its current stage to a next stage, and
- storing the updated state of the loyalty program of the customer.

When the triggering event is the creation of a personal account on a website or accessing the account, the detection may comprise :
- receiving customer data and associated information regarding connection to or creation of a personal account,
- identifying, from the customer data, a loyalty program associated with the customer, and storing the information regarding connection or creation of a personal account in the loyalty program database,
- if the condition for transition between the current stage to a next stage of the program is fulfilled, allowing the customer to transition from the current stage to the next stage, and
- storing the updated stage of the loyalty program of the customer.

If the customer reaches a reward attribution stage of its loyalty program, the method then comprises a step of reward attribution 200 to the customer. Else, the customer reaches a new progression stage and the step of detecting an event may then be iterated.

This step comprises performing a random draw 210 of a reward according to the probabilities assigned to the second type rewards. If the draw outputs a second-type reward, this reward is attributed to the customer. Alternatively, a first-type reward is determined to be attributed to the customer according to step 220 below.

In an embodiment, the method may also comprise a step, prior to performing the draw, of assigning or updating probabilities to each second-type reward.

For instance, a second-type reward may be an event reward that can only occurred within a specific period or at a specific time. Assignment of probabilities to such event rewards may take into account the date at which the customer receives the reward, i.e. the date at which he reaches the reward attribution stage and step 200 is performed, and the date of the event. In an embodiment, the assignment of a probability to each event reward comprises determining the date of the event, and the current date, and assigning a zero probability to past events (given that the list of rewards stored in the reward database is defined for a certain duration such as a year), or to events having a date too remote from the current date. For instance, events occurring more than a number of months, such as three months, from the current date, may have a zero probability.

According to another example, the probabilities assigned to second-type rewards which are product rewards may be based on the customer's behavior, and in particular on the type of products that the customer usually purchases.

In an embodiment, assigning a probability to a product reward comprises determining a category of the product corresponding to the reward, determining, in the purchase data of the customer, categories of products purchased by the customer, and assigning lower probabilities to the product rewards belonging to categories purchased by the customer than to other categories. Accordingly, there is a higher probability for the customer of discovering a new category of products he is not familiar with.

The assignment of a probability to an event or service second-type reward can also depend upon a customer's location. In that case, the assignment of a probability to such a reward comprises determining a location of the event or service, and determining a location of the customer. The location of the customer can be determined based on the initial data provided by the customer upon initialization of the loyalty program and/or it may be determined based on the location of the customer's purchases, such as the last purchase performed by the customer. The assignment then takes into account the location of the customer by assigning to remote service or events a lower or zero probability. In an embodiment, the computer 10 may compute a distance between the location of the service or event of the reward and the consumer's location, and assign a lower or zero probability for rewards located at a distance greater than a predefined threshold.

This probability assignment ensures that the rewards obtained by the customers are adapted to the customer's situations.

If no second-type reward is drawn at step 210, the method proceeds to step 220 of determining a first-type reward. This step comprises accessing 221 the customer's purchase history and determining 222, based on this history, the current reward attribution stage, and the first-type reward attribution rule corresponding to this reward attribution stage, a category of reward that can be attributed to the user.

Then, a first-type reward selected among this category can be selected during a step 223 in order to be delivered to the user. If a category comprises a plurality of rewards, the selection may be performed at random, or it may be performed based on customer preferences, which can be gathered from the customer's purchase history.

In embodiments where the loyalty program management server has access to stocks of the rewards in points of sale, the selection of the reward at step 223 may be implemented depending on the amount of stock of the point of sale. It may then comprise:
- identifying a point of sale based on customer information. A point of sale may be identified as the closest from the customer's location, or a selection of points of sale within a determined distance from the customer's location may be done, or a preferred point of sale may have been identified by the customer upon enrolment in the loyalty program.
- accessing the stock of the point of sale and determining whether at least one reward of the determined category is in stock,
- if so, selecting the reward among the rewards of the determined category which are in stock,
- if not, determining the reward to deliver to the customer as a first-type reward of another category from the which has been previously determined.

In embodiments, when a customer reaches the last reward attribution stage of its loyalty program, the method may comprise a step of assigning an extra reward to the customer. This step can be performed according to step 200 described above.

In embodiments, the method may comprise a step 300 of detecting an event triggering transition of more than one stage in the loyalty program. Such event can for instance be a customer's birthday, the purchase by a customer of a specific product or several products from a same range of products, etc. Detection of the customer's birthday can be performed by comparing the current date with the customer's birthday which has been received in the initialization phase.

As previously mentioned, the list of rewards of the reward database is periodically updated, at the end of a predefined period. In an embodiment, the method comprises a step of terminating all the customers loyalty programs at the end of the predefined period, even if they have not reached the last stage of their programs, and initializing a new program for each customer once the list of rewards has been updated in the database.

In an embodiment, the method may further comprise analyzing 400 the loyalty program of a customer, including the purchase data stored together with the loyalty program, in order to detect a specific event or behavior, and assigning a particular status to the customer according to the detected event or behavior. The status assigned to the customer may be in the form of a reward that can be notified to the customer by email or on social networks, and that the customer can transmit or share with a community. For instance, a particular status may be assigned to the customer upon detection of specific purchases, of a high progression speed within the loyalty program, or a particular purchase behavior, etc.

## Claims

1. A method for managing a loyalty program comprising a predefined number of stages comprising at least one progression stage and at least one reward attribution stage, the method being implemented by a loyalty program management server (1) comprising :
- a computer (10),
- a reward database (11) storing a list of rewards, wherein the list of rewards comprises :
∘ For each reward attribution stage, a list of respective first-type rewards distributed in a plurality of categories, and at least one first-type reward attribution rule, and,
∘ at least one second-type reward, associated to a probability,
- a loyalty programs database (12), storing, for each of a plurality of customers, a current state of a loyalty program associated to the customer, and information regarding the customer's purchase history,
the method comprising, when a user reaches (200) a reward attribution stage of its loyalty program, determining a reward to deliver to the customer, said determination comprising:
- performing a random draw (210) of a type of reward to deliver to the customer according to the probability associated to each second-type reward,
- if the random draw outputs one second-type reward, determining the reward to deliver as the outputted second-type reward,
- if not,
∘ accessing (221) the customer's purchase history,
∘ determining (222), based on the reward attribution stage, the customer's purchase history and the first-type reward attribution rule, a first-type reward category, and
∘ determining (223) the reward to deliver to the customer as a first-type reward of the determined category.

2. The method according to claim 1, further comprising a preliminary step of initializing (060) a customer profile, comprising acquiring data relating to the customer, initializing a loyalty program of the customer, and storing in the loyalty programs database the initial state of the loyalty program of the customer in association with the data relating to the customer.

3. The method according to claim 1 or 2, wherein each loyalty program comprises a number of progression stages, wherein at least one progression stage precedes each reward attribution stage, and the transition from a progression stage to a next stage is triggered upon the customer performing at least one determined event.

4. The method according to claim 3, wherein an event triggering transition from a progression stage to a next stage is chosen among the group consisting of:
- enrolling to the loyalty program,
- accessing a determined website,
- creating or accessing a personal account on a user interface of a determined website,
- purchasing an article or service online,
- purchasing an article or service of a type never purchased before,
- purchasing an article or service through a purchase channel never used before,
- visiting a cultural site or exhibition
- participating in a determined contest.

5. The method according to any of the preceding claims, wherein the loyalty program management server (1) is further configured to access a database storing, for each of a plurality of points of sale, a level of stock of each first-type reward within the point of sale,
and the method further comprises, if the random draw does not output a second-type reward:
- determining at least one point of sale based on customer's information,
- determining if at least one first-type reward of the determined category is in stock in at least one determined point of sale, and, if not,
- determining (223) the reward to deliver to the customer as a first-type reward of another category from the one previously determined.

6. The method according to any of the preceding claims, wherein at least one first-type reward attribution rule determines the first-type reward category based on the total amount of transactions performed by the customer.

7. The method according to any of the preceding claims, wherein at least one first-type reward attribution rule determines the first-type reward category based on the time elapsed between the customer initiating its loyalty program and the customer reaching the current reward attribution step.

8. The method according to any of the preceding claims, wherein at least one first-type reward attribution rule determines a first-type reward category based on the number of purchases performed by the customer.

9. The method according to any of the preceding claims, wherein some first-type rewards are products rewards, the categories of first-type rewards relate to different categories of products, and at least one first-type reward attribution rule determines a first-type reward category based on the type of products that are regularly purchased by the customer.

10. The method according to any of the preceding claims, the method further comprising a step of assigning a probability to each second-type reward prior performing the random draw.

11. The method according to the preceding claim, wherein some second-type rewards are events or service rewards, and the assignment of a probability to an event or service reward comprises :
- determining a location of the event or service,
- determining a location of the customer based on the acquired data relative to the customer or purchase data of the customer, and
- setting a zero probability for event or service rewards having a location remote from the location of the customer by a distance exceeding a determined threshold.

12. The method according to any of the preceding claims, further comprising, at the end of a predefined period of time, terminating all the customers loyalty programs, updating the list of rewards stored in the rewards database, and for all the customers who previously had a customer loyalty program, initializing a new loyalty program.

13. Computer software comprising instructions to implement the method according to any of the preceding claims, when the software is executed by a processor.

14. A system for implementing a personalized loyalty program, comprising a loyalty program management server (1) comprising:
- a computer (10),
- a reward database (11) storing a list of rewards, and
- a loyalty programs database (12), storing, for each of a plurality of customers, a current state of a loyalty program associated to the customer,
wherein the server (1) is configured for implementing the method according to any of claims 1 to 11.

15. The system according to claim 14, further comprising a customer terminal (20), configured to receive, from the customer, identification information and information related to a purchase of the customer, and to transmit said information to the server (1), the customer terminal (20) being further configured to receive reward information from the computer and display said reward information.
